# EUROPÄISCHE PATENTSCHRIFT

(11) **EP 3 789 906 B1**
(45) Veröffentlichungstag und Bekanntmachung des Hinweises auf die Patenterteilung: **07.07.2021**
(21) Anmeldenummer: 19195509.5
(22) Anmeldetag: 05.09.2019
(51) Int. Cl.: G06K 7/14

(54) **BESTIMMEN DER MODULGRÖSSE EINES OPTISCHEN CODES**
DETERMINE THE MODULE SIZE OF AN OPTICAL CODE
DÉTERMINER LA TAILLE DU MODULE D'UN CODE OPTIQUE

(43) Veröffentlichungstag der Anmeldung: 10.03.2021
(73) Patentinhaber: SICK AG, 79183 Waldkirch (DE)
(72) Erfinder: Schüler, Pascal, 79331 Teningen (DE); Hampf, Marcel, 77955 Ettenheim (DE); Olsson, Fredrik, 582 26 Linköping (SE)

(56) Entgegenhaltungen:
- EP-A1- 3 428 834
- EP-A2- 2 393 035
- US-A- 5 053 609
- US-A1- 2006 098 241

## Beschreibung

Die Erfindung betrifft ein Bestimmen der Modulgröße eines optischen Codes sowie einen Codeleser nach dem Oberbegriff von Anspruch 1 beziehungsweise 14.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Eine charakteristische Größe eines optischen Codes ist die Modulgröße. Ein Modul ist das kleinste Element des Codes, und die Codeelemente oder Zeichen sind aus einem oder mehreren Modulen zusammengesetzt. Die Modulgröße ist ein Maß für die Ausdehnung des Moduls und wird in Pixel pro Modul (ppm) angegeben. Somit hat ein Strich bei einem Barcode eine Breite, die dem Ein- oder einem Vielfachen der Modulgröße entspricht, und analog gilt dies für die beiden Dimensionen eines dunklen oder hellen Feldes in einem zweidimensionalen Code. Eine große Modulgröße bedeutet, dass der Code hochaufgelöst in den Bilddaten oder Grauwertprofilen erfasst ist. Folglich wird das Decodieren umso herausfordernder, je kleiner die Modulgröße wird, besonders, wenn sie einen Bereich von zwei oder noch weniger ppm erreicht.

Es wäre von Vorteil, wenn der Decodierer eine gute Abschätzung vor allem im Falle kleiner Modulgrößen schon anfänglich kennen würde. Dann ließen sich nämlich Maßnahmen ergreifen, um auch den schlecht aufgelösten Code noch zu lesen. Ein Beispiel ist die sogenannte Superresolution. Damit sind Verfahren gemeint, die mehrere niedriger aufgelöste Bilder zu einem höher aufgelösten Bild verrechnen. Umgekehrt kann womöglich auf ein aufwändiges Decodierverfahren für einen ohnehin bei großer Modulgröße hochaufgelöst erfassten Code verzichtet werden.

Tatsächlich ist aber bei herkömmlichen Verfahren die Modulgröße erst im Nachhinein nach erfolgreichem Decodiervorgang bekannt. Dann ist klar, welche Zeichen der Code enthält, und anhand der Gesamtgröße des Codes in den Bilddaten ist dann auch die Modulgröße mit großer Genauigkeit berechenbar. Bei einem Barcode beispielsweise wird anhand der Zeichen die Gesamtzahl der Module zwischen Start- und Stoppmuster bestimmt und die Ausdehnung des Codes in Pixeln durch diese Gesamtzahl dividiert. Somit ist die Modulgröße ein Ergebnis des Decodierens und keine Unterstützung dafür.

Im Prinzip ist die Modulgröße nichts anderes als der kleinste Abstand zwischen zwei Kanten des aufgenommenen Grauwertprofils. Solche Kanten, also Übergänge zwischen den hellen und dunklen Codeelementen, lassen sich durch die Extrema in der Ableitung des Grauwertprofils auffinden. Das Ergebnis hängt aber empfindlich davon ab, wie genau die Kantenpositionen lokalisiert werden. Besonders bei sehr kleinen Modulgrößen wird dies schwierig, da die Kantenpositionen zunächst nur diskret und damit nicht subpixelgenau vorliegen. Außerdem sind die Kantenpositionen rauschanfällig. Schon im Grundsatz ist ein rein auf Kanten basierendes Verfahren eine Binarisierung, mit der die ursprüngliche Grauwertinformation von regelmäßig acht Bit oder sogar mehr auf nur ein Bit reduziert wird, und auch dieser Informationsverlust begrenzt die mögliche Genauigkeit der Bestimmung der Modulgröße.

Es ist weiterhin im Bereich des Codelesens bekannt, ein Grauwerthistogramm der Bilddaten zu erzeugen. Das wird aber ganz für andere Zwecke verwendet, beispielsweise um eine gleichmäßigere Ausleuchtung zu erhalten oder zu emulieren oder um eine geeignete Binarisierungsschwelle zu ermitteln.

Es ist daher Aufgabe der Erfindung, eine verbesserte Möglichkeit zur Bestimmung der Modulgröße anzugeben.

Diese Aufgabe wird durch ein Verfahren zum Bestimmen der Modulgröße eines optischen Codes sowie einen Codeleser nach Anspruch 1 beziehungsweise 14 gelöst. Der optische Code kann ein Barcode, aber auch ein zweidimensionaler Code nach einem der diversen bekannten Standards sein. Es werden Bilddaten erzeugt, die den Code enthalten und vorzugsweise zumindest grob segmentiert und damit auf den Codebereich zugeschnitten sind. Bilddaten werden typischerweise mit einem Bildsensor eines kamerabasierten Codelesers aufgenommen, aber auch das Intensitätsprofil eines Barcodescanners wird hier mit dem Begriff Bilddaten umfasst. Aus den Bilddaten wird eine Intensitäts- oder Helligkeitsverteilung erzeugt. Das ist allgemein eine Funktion der relativen Häufigkeit der möglichen Helligkeitswerte, insbesondere in diskreter Form ein Grauwerthistogramm. Die Helligkeitsverteilung lässt sich also darstellen, indem auf der X-Achse die möglichen Helligkeiten oder Intensitäten, etwa bei acht Bit die Grauwerte von 0 für schwarz bis 255 für weiß, und auf der Y-Achse die zugehörigen relativen Häufigkeiten aufgetragen werden. Bei einem Grauwerthistogramm sind die Grauwerte sogenannte Bins, in denen die Pixel gezählt werden, die den entsprechenden Helligkeitswert haben.

Die Erfindung geht von dem Grundgedanken aus, die Modulgröße aus der Helligkeitsverteilung zu bestimmen. Das ist ein indirekter Zugang, bei dem keine Abstände des Codes oder Abstände zwischen Kanten in dem Code gemessen werden. Vielmehr wird die Tatsache ausgenutzt, dass die Modulgröße besonders im Falle kleiner Modulgrößen beeinflusst, welche Grauwerte in den Bilddaten auftreten beziehungsweise wie diese verteilt sind, und das wird in der Helligkeitsverteilung untersucht. Das Bestimmen einer Modulgröße kann vergleichsweise grob sein und nur testen, ob die Modulgröße in einer bestimmten Klasse liegt. Vorzugsweise wird jedoch tatsächlich ein numerischer Wert abgeleitet.

Die Erfindung hat den Vorteil, dass eine einfache und schnelle Berechnung der Modulgröße ermöglicht wird, die in sehr frühen Phasen der Bildverarbeitungskette stattfinden kann und insbesondere kein erfolgreiches Decodieren voraussetzt. Dabei wird eine hohe Genauigkeit auch im Subpixelbereich erreicht, beispielsweise für Barcodes von 2,0 ppm bis hinunter zu 0,6 ppm und für zweidimensionale Codes 2,5 ppm bis 1,5 ppm. Das sind ppm-Bereiche, in denen eine Dekodierung heutzutage beispielsweise mit Superresolution-Verfahren möglich ist. Das Verfahren setzt auch nicht auf einer positionstreuen, hochgenauen Kantendetektion auf und nutzt Bildinformation aus der Fläche, nicht nur lokale Bildinformation. Es ist daher auch deutlich robuster gegenüber lokalen Störungen oder Rauschen.

Die Modulgröße wird bevorzugt aus einem mittleren Bereich der Helligkeitsverteilung ohne die hellsten und dunkelsten Bereiche bestimmt. Die gängige Erwartung an die Bilddaten eines hochaufgelösten Codes ist, dass die Helligkeitsverteilung bimodal mit einem seitlichen Peak für die hellen und einem zweiten seitlichen Peak für die dunklen Codebereiche sein sollte. Herkömmlich wird das genutzt, um die Bilddaten zu binarisieren, d.h. jedes Pixel als hell oder dunkel zu klassifizieren. In dieser Ausführungsform wird nun die Helligkeitsverteilung gerade auf den Übergangsbereich ohne die am eindeutigsten hellen und dunklen Pixel beschränkt. Das Interesse liegt demnach auf den Zwischenwerten, die herkömmlich untergehen oder einer der beiden Klassen hell oder dunkel zugeordnet werden. Bei einem hochaufgelöst aufgenommenen Code mit großer Modulgröße ist dieser Übergangsbereich beinahe flach. Die Erfindung hat erkannt, dass sich bei kleinen Modulgrößen in dem Übergangsbereich ein zusätzlicher mehr oder weniger zerfaserter Peak ausbildet, aus dessen Eigenschaften sich die Modulgröße rekonstruieren lässt.

In den Bilddaten werden bevorzugt Kanten des optischen Codes aufgefunden, und die Helligkeitsverteilung wird nur über Bilddaten in der Umgebung von Kanten gebildet. Statt also, was prinzipiell auch möglich ist, die Helligkeitsverteilung aus allen Pixel der Bilddaten des Codes zu bestimmen, wird eine Auswahl bestimmter Pixel getroffen, nämlich im Bereich von Kanten. Dazu ist keine sonderlich positionstreue oder gar subpixelgenaue Lokalisierung von Kanten erforderlich, da es höchstens moderate Fehler in der Bestimmung der Modulgröße verursacht, wenn auch einige Pixel aus etwas größeren Umgebungen zu der Helligkeitsverteilung beitragen. So können beispielsweise wie einleitend erwähnt die Kanten als Extrema der Ableitung eines Grauwertprofils lokalisiert und die dortigen Pixel sowie Pixel mit einem bestimmten Höchstabstand für die Bestimmung der Helligkeitsverteilung verwendet werden. Durch die Beschränkung auf die Umgebung von Kanten gehen größere rein dunkle oder helle Bereiche nicht in die Helligkeitsverteilung ein, die entsprechend der Diskussion des Vorabsatzes zur erfindungsgemäßen Abschätzung der Modulgröße wenig beitragen würden. Die Betrachtung von Umgebungen von Kanten lässt das Erfordernis entfallen, Schwellen zu definieren, was als hell oder dunkel an den Rändern der Helligkeitsverteilung gilt und was als der hauptsächlich relevante Übergangsbereich von Grauwerten dazwischen.

Die Helligkeitsverteilung wird bevorzugt auf einen aktiven Bereich zugeschnitten, in dem die Häufigkeit eine Rauschschwelle übersteigt. Dadurch werden Bereiche der Helligkeitsverteilung eliminiert, die lediglich aufgrund von Rauscheffekten eine gewisse Häufigkeit der entsprechenden Grauwerte suggerieren und die tatsächlich gar keine für die Bestimmung der Modulgröße relevante Information enthalten. Die nachfolgenden Kriterien und Auswertungen beziehen sich vorzugsweise auf den aktiven Bereich und nicht die gesamte Helligkeitsverteilung, auch wo das nicht eigens erneut erwähnt ist.

Die Modulgröße wird bevorzugt aus der Breite, dem Integral und/oder dem Maximalwert der Helligkeitsverteilung bestimmt. Mit diesen Charakteristika werden die Ausdehnung und Ausprägung der Helligkeitsverteilung, vorzugsweise des Übergangsbereichs zwischen hell und dunkel, in einfach zu bestimmenden und zu verarbeitenden Größen erfasst. Die Breite entspricht der Differenz zwischen dem kleinsten und größten vorkommenden Grauwert in der Helligkeitsverteilung. Integral und Maximalwert der Helligkeitsverteilung beschreiben auf einfache Weise den Verlauf der Helligkeitsverteilung. Vorzugsweise werden Breite und Integral aus dem aktiven Bereich der Helligkeitsverteilung oberhalb einer Rauschschwelle berechnet, damit marginal von Null verschiedene Häufigkeiten das Ergebnis nicht verzerren. Aus den genannten Größen kann eine Schätzung der Modulgröße berechnet werden. Beispielsweise werden schon gute Ergebnisse mit der Annahme erzielt, dass die Modulgröße zumindest für kleine Modulgrößen linear von der Breite der Helligkeitsverteilung abhängt, insbesondere der Breite des aktiven Bereichs der Helligkeitsverteilung. Die Breite muss bei diesem Ansatz nur noch mit einem Skalierungsfaktor multipliziert werden, um die Modulgröße zu bestimmen.

Die Modulgröße wird bevorzugt aus dem Quotienten aus Integral und Breite der Helligkeitsverteilung bestimmt. Das ist besonders einfach zu berechnen und hat sich zugleich als besonders geeignete Basis für die Berechnung der Modulgröße erwiesen.

Der Quotient wird vorzugsweise mit einer Skalierungsfunktion auf die Modulgröße abgebildet, insbesondere in der Einheit Pixel pro Modul. Die Skalierungsfunktion dient einerseits der Umrechnung auf die gesuchte Einheit ppm und zudem der Anpassung an die Anwendungsbedingungen, unter denen der Code aufgenommen wurde. Sie kann beispielsweise aus bereits gelesenen Codes mit bekannter oder nachträglich nach dem Decodieren bestimmter Modulgröße kalibriert oder eingelernt werden. Vereinfachend wird nur ein Skalierungsfaktor als Skalierungsfunktion verwendet, denn im besonders interessanten Bereich von Modulgrößen bis etwa 2,5 ppm genügt dies für gute Ergebnisse.

Die Helligkeitsverteilung wird bevorzugt mit unterschiedlichen Gewichtsfaktoren im Zentrum und an den Seiten der Helligkeitsverteilung reskaliert. Dazu wird beispielsweise eine Wichtungsfunktion punktweise mit der Helligkeitsverteilung multipliziert oder eine mathematisch gleichwertige Reskalierung vorgenommen. Wie schon des öfteren erwähnt, gehen die seitlichen Bereiche der Helligkeitsverteilung auf die hellen und dunkeln Pixeln in den flächigen Bereichen von Codes zurück, während die Modulgröße eher aus den Grauwerten im Übergangsbereich dazwischen geschätzt wird. Daher kann es sinnvoll sein, die Helligkeitsverteilung durch die Gewichtsfaktoren künstlich anzupassen und so bestimmten Teilen ein höheres oder geringeres Gewicht zu geben. Sofern ein Integral der Helligkeitsverteilung bestimmt wird, findet die Reskalierung vorzugsweise davor statt.

Das Zentrum der Helligkeitsverteilung wird vorzugsweise relativ zu den Seiten angehoben. Die Helligkeitsverteilung wird also seitlich mit einem Gewicht kleiner Eins und zentral mit einem Gewicht größer Eins reskaliert. Dadurch gewinnt der mittlere Bereich der Helligkeitsverteilung an Einfluss. Wenn bereits die Helligkeitsverteilung nur auf der Umgebung von Kanten basiert, so wird der dadurch erwünschte Effekt, die hellen und dunkeln Flächenbereiche unberücksichtigt zu lassen, durch die neue Gewichtung nochmals verstärkt.

Die Helligkeitsverteilung wird bevorzugt in eine linke Seite, ein Zentrum und eine rechte Seite dreigeteilt, und jeweils ein Gewichtsfaktor wird für die drei Teile zum Reskalieren verwendet. Das ist eine spezielle und einfache Implementierung, um die Seiten der Helligkeitsverteilung anders zu gewichten als deren Zentrum. Vorzugsweise erfolgt eine gleichmäßige Dreiteilung. Die Gewichtsfaktoren für die rechte und linke Seite sind vorzugsweise untereinander gleich.

Der optische Code wird vorzugsweise nach dem Bestimmen der Modulgröße gelesen. Das Bestimmen der Modulgröße ist also ein früher Schritt in der Bildverarbeitung zum Lesen des Codes und kann nicht auf die Ergebnisse der Decodierung zurückgreifen. Für ein Bestimmen der Modulgröße nach dem Decodieren stünden auch wie einleitend beschrieben sehr genaue herkömmliche Alternativverfahren zur Verfügung, die nicht auf der Helligkeitsverteilung beruhen.

Vielmehr wird umgekehrt vorzugsweise der Code mit einem anhand der Modulgröße ausgewählten und/oder durch die Modulgröße parametrierten Decodierverfahren gelesen. Die Modulgröße ist also ein Parameter, der beim Decodieren und womöglich schon für eine Feinsegmentierung der Codebereiche zur Verfügung steht. Das Decodieren wird durch die Vorabkenntnis der Modulgröße unterstützt, vereinfacht, beschleunigt, verbessert oder überhaupt erst ermöglicht. Ein Beispiel ist Superresolution, also das Erzeugen von Bilddaten höherer Auflösung aus mehreren Sätzen von Bilddaten niedrigerer Auflösung. Die Modulgröße kann der Hinweis darauf sein, für welche Codes Superresolution überhaupt gebraucht wird. Zudem ist die Modulgröße auch ein sehr hilfreicher Parameter für einen Superresolution-Algorithmus. Ein weiteres Beispiel ist die Erkenntnis, dass ein Decodieren gar nicht möglich sein wird, weil die Modulgröße für die vorhandenen Decodierverfahren zu klein ist. Derzeit liegt eine praktische grenze für Barcodes bei 0,6 ppm. Es spart dann Ressourcen, den Code direkt anhand der Modulgröße als unlesbar zu klassifizieren, statt erst noch aufwändig diverse komplexe Decodierverfahren daran scheitern zu lassen.

Die bestimmte Modulgröße wird vorzugsweise mit einem Grenzwert verglichen, um je nach Über- oder Unterschreiten ein Decodierverfahren oder einen Baustein eines Decodierverfahrens einzusetzen. Das ist gewissermaßen die diskrete Betrachtung entsprechend dem Vorabsatz, bei der nicht der Zahlenwert der Modulgröße verwendet wird, sondern nur nach Art eines Schalters verglichen wird, in welche Klasse die Modulgröße fällt, vorzugsweise in eine der Klassen kleine Modulgröße und große Modulgröße. Die Grenze dazwischen liegt bevorzugt in einem Bereich von ein bis drei ppm, noch bevorzugter zwischen 1,5 und 2,5 ppm. Ein besonders geeigneter Grenzwert ist 2 ppm für Barcodes und 2,5 ppm für zweidimensionale Codes. Beispielsweise für kleine Modulgrößen ein Superresolution-Algorithmus verwendet. Es ist weiterhin üblich, mehrere Decodierer das Lesen eines Codes versuchen zu lassen, und die Zusammensetzung der jeweiligen Decodierer kann ganz oder teilweise davon abhängig gemacht werden, ob die Modulgröße den Grenzwert überschreitet oder nicht. Es ist denkbar, dass nicht ganze Decodierverfahren, sondern nur bestimmte Bausteine betroffen sind, die je nach Modulgröße unterhalb oder oberhalb des Grenzwerts anders parametriert oder überhaupt hinzugezogen werden oder nicht.

Ein erfindungsgemäßer Codeleser zum Lesen von optischen Codes weist einen Bildsensor zum Aufnehmen von Bilddaten mit dem Code auf. Das kann der Lichtempfänger eines Codescanners, ein Zeilensensor zur Erfassung einer Codezeile oder eines flächigen Codebildes durch Zusammensetzen von Bildzeilen oder ein Matrixsensor sein. Auch mehrere Kameraköpfe sind denkbar, deren Bild zusammengesetzt wird. In einer Steuer- und Auswertungseinheit, die selbst Teil eines Barcodescanners oder eines kamerabasierten Codelesers oder als Steuerungsgerät daran angeschlossen sein kann, ist ein Decodierverfahren zum Lesen des Codes implementiert. Im Rahmen des Decodierens, vorzugsweise als frühen Schritt noch vor dem eigentlichen Lesen, bestimmt die Steuer- und Auswertungseinheit die Modulgröße mit einem erfindungsgemäßen Verfahren in einer der erläuterten Varianten.

Der Teil der Steuer- und Auswertungseinheit, der für die Bestimmung der Modulgröße zuständig ist, kann als embedded system ausgestaltet sein. Denkbar ist weiterhin ein FPGA direkt bei dem Bildsensor, beispielsweise in einem Kamerakopf, der das aufgenommene Bild als einen ganz frühen Verarbeitungsschritt mit dem erfindungsgemäßen Verfahren analysiert, um die Modulgröße zu bestimmen. Das würde sogar schon funktionieren, wenn die Kamera nur eine Kachel, d.h. einen Teilbereich des Lesefeldes erfasst, in dem sich lediglich ein Codefragment befindet, dass so gar nicht gelesen werden könnte. Erst nach dem Zusammenfügen der Kacheln (Stitching) mehrerer Kameraköpfe beziehungsweise mehrerer nacheinander aufgenommener Bilder erfolgt die Decodierung, und zu diesem Zeitpunkt wäre die Modulgröße längst bekannt und könnte beispielsweise auch bei dem Stitching schon berücksichtigt werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: ein Beispiel eines Grauwertprofils;
- Fig. 3: eine Darstellung der Ableitung des Grauwertprofils gemäß Figur 2 zum Auffinden von Kanten;
- Fig. 4: ein Beispiel eines Grauwerthistogramms eines Codes mit großer Modulgröße;
- Fig. 5: ein Beispiel eines Grauwerthistogramms eines Codes mit kleiner Modulgröße;
- Fig. 6: eine Darstellung des aktiven Bereichs eines Grauwerthistogramms oberhalb einer Rauschschwelle mit Veranschaulichung von Integral und Breite des aktiven Bereichs;
- Fig. 7: ein Ablaufschema für einen beispielhaften Algorithmus zum Bestimmen der Modulgröße aus einem Grauwerthistogramm; und
- Fig. 8a-e: beispielhafte Darstellungen von Grauwerthistogrammen für verschiedene Modulgrößen.

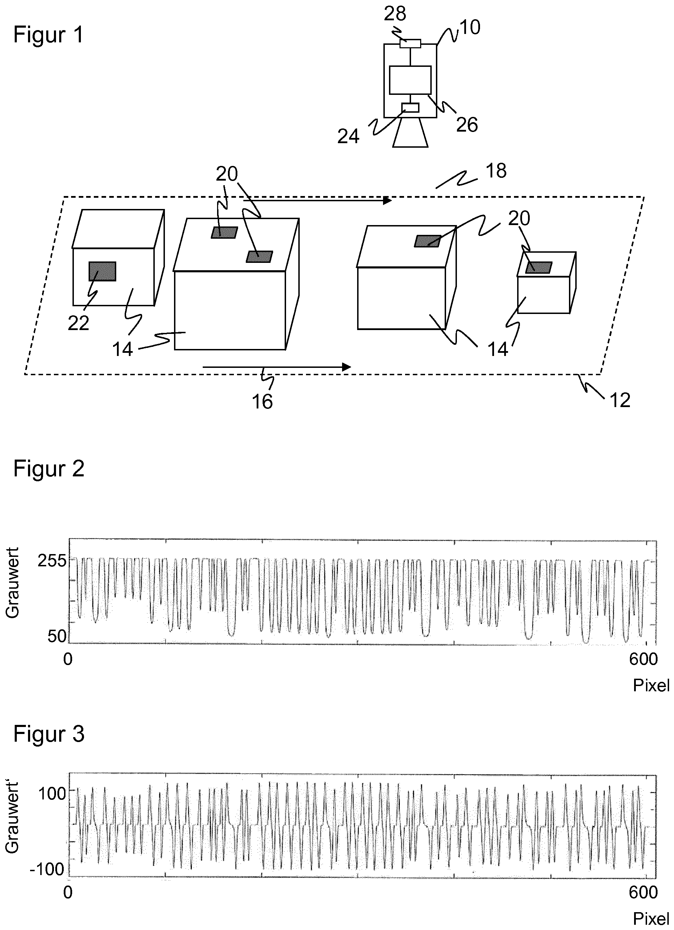

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes oder noch konkreter einen Vorverarbeitungsschritt dazu, so dass dieses Beispiel nicht einschränkend verstanden werden darf.

Der Codeleser 10 erfasst mit einem Bildsensor 24 Bilddaten der geförderten Objekte 14 und der Codebereiche 20, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Bildsensor 24 ein einfacher Lichtempfänger wie eine Photodiode ausreicht. Es kann direkt versucht werden, aus einer Bildzeile den Code zu lesen, oder die Steuer- und Auswertungseinheit 26 fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die mehreren Aufnahmen werden nacheinander und/oder von mehreren Codelesern 10 aufgenommen, die beispielsweise mit ihren Erfassungsbereichen 18 nur gemeinsam die gesamte Breite des Förderbands 12 abdecken, wobei jeder Codeleser 10 gleichsam nur eine Kachel des Gesamtbildes aufnimmt und die Kacheln durch Bildverarbeitung (Stitching) zusammengefügt werden. Auch ein nur fragmenthaftes Decodieren innerhalb einzelner Kacheln mit anschließendem Zusammenfügen der Codefragmente ist denkbar.

Hauptaufgabe des Codelesers 10 ist, die Codebereiche 20 zu erkennen und die dort angebrachten Codes auszulesen. Als ein Teilschritt, vorzugsweise möglichst früh in der Verarbeitungskette und noch vor dem eigentlichen Codelesen, wird die Modulgröße aus einer Helligkeitsverteilung beziehungsweise einem Grauwerthistogramm der aufgenommenen Bilder des jeweiligen Codes 20 bestimmt. Dies wird weiter unten anhand der Figuren 2 bis 8 im Detail erläutert.

Über eine Schnittstelle 28 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst.

Figur 2 zeigt ein Beispiel von Bilddaten eines Codes 20 in Form eines Grauwertprofils einer Bildzeile durch den Code 20. Ein solches Grauwertprofil bildet die Ausgangsdaten, die mittels Bildsensor 24 gewonnen werden. Das Beispiel eines Grauwertprofils ist keine echte Einschränkung. Optische Codes bestehen aus Bereichen in zwei Modalitäten, häufig schwarze und weiße Farbe, manchmal Strukturen beziehungsweise Prägungen, aber jedenfalls lässt sich die Codeinformation durch Grauwertbilder erfassen. Auch kommt es für das Verständnis der Erfindung nicht darauf an, ob das Grauwertprofil als ein Scan eines Barcodescanners, eine Bildzeile eines zeilenförmigen Bildsensors oder eine durch ein flächiges Bild des Codes 20 gezogene Linie erfasst ist.

Die weitere Beschreibung erfolgt am Beispiel von Barcodes, das erfindungsgemäße Verfahren zur Bestimmung der Modulgröße funktioniert aber ganz analog auch bei zweidimensionalen Codes. Im Falle eines Barcodes sollte das Grauwertprofil nicht zu stark parallel zu den Streifen aufgenommen sein. Wenn die Modulgröße in absoluten Längeneinheiten bestimmt werden sollte, so müsste auch bekannt sein, in welchem Winkel das Grauwertprofil durch den Code läuft. Die für das Decodieren interessante Größe ist aber, wie viele Pixel jeweils ein Modul repräsentieren (ppm, pixel per module), und zwar in genau den Bilddaten, die auch der Decoder erhält, einschließlich der jeweiligen Schräglage in dem Code 20.

Im Prinzip ist die gesuchte Modulgröße in Figur 2 schon repräsentiert. Die jeweiligen Plateaus bei hohen und niedrigen Grauwerten entsprechen den Zeichen des Codes, so dass die Breiten der Plateaus vermessen und die Modulgröße als die kleinste Länge eingepasst werden könnte, aus der sich die Breiten durch Ein- und Vielfache rekonstruieren lassen. Das ist aber bei Weitem zu fehlerbehaftet, zumal zahlreiche Plateaus gar nicht als solche erkennbar und erst recht nicht verlässlich in ihrer Breite ausmessbar sind.

Figur 3 zeigt die Ableitung des Grauwertprofils gemäß Figur 2. Hier erscheinen die Kanten des Codes, also die Übergänge zwischen hellen und dunklen Codeelementen und umgekehrt, als Extrema. Anstelle der Plateaus wie in Figur 2 könnten also grundsätzlich die Abstände zwischen benachbarten Extrema für eine Bestimmung der Modulgröße herangezogen werden, wie auch schon in der Einleitung diskutiert. Problematisch dabei ist, dass die Kantenpositionen verrauscht sind und auch ohne Rauschen bestenfalls eine Bestimmung der Modulgröße mit der Genauigkeit von einem Pixel ermöglichen, aber keine subpixelgenaue Bestimmung. Jedoch können auch die nur mit diesen Einschränkungen vergleichsweise grob bestimmten Kantenpositionen für das noch zu erläuternde erfindungsgemäße Verfahren zur Bestimmung der Modulgröße nützlich sein.

Erfindungsgemäß wird nämlich die Modulgröße nicht aus Grauwertprofilen oder Ableitungen davon bestimmt, sondern ein indirekter Zugang über ein Histogramm von Grauwerten oder etwas allgemeiner eine Helligkeitsverteilung gewählt.

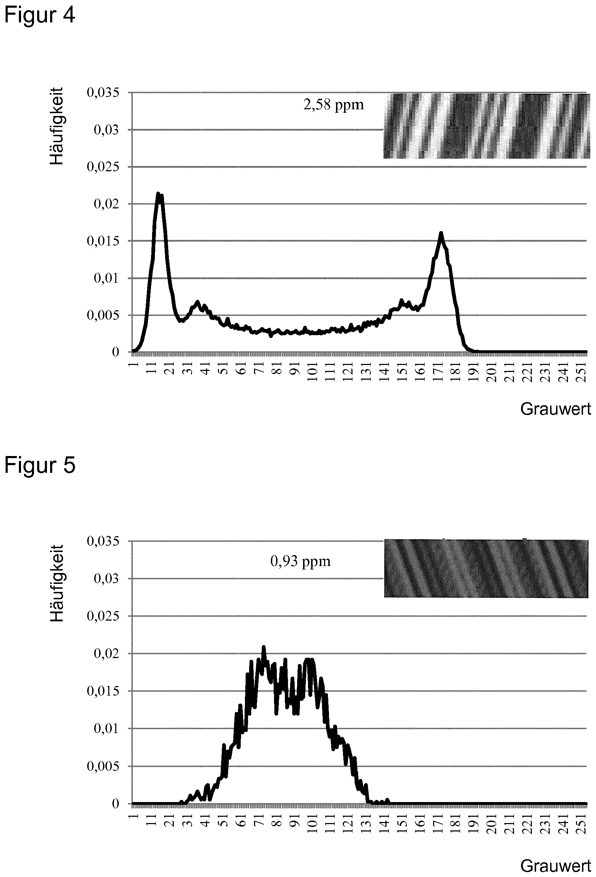

Figur 4 zeigt ein beispielhaftes Grauwerthistogramm für einen Barcode, der gut aufgelöst mit einer Modulgröße von 2,58 ppm aufgenommen wurde. Das kleine Einsatzbild oben rechts zeigt zur Illustration einen realen Bildausschnitt dazu. Das Grauwerthistogramm entsteht, indem die möglichen Grauwerte, in diesem Fall 0-255 entsprechend 8-Bit-Bilddaten, als Bins auf der X-Achse aufgetragen werden. Für jedes Pixel der betrachteten Bilddaten des Codes wird dasjenige Bin um Eins heraufgezählt, das dem Grauwert des Pixels entspricht. Die Quiet-Zonen des Codes werden vorzugsweise nicht im Grauwerthistogramm berücksichtigt. Abschließend kann noch eine Normierung durch Teilen durch die Gesamtzahl beitragender Pixel erfolgen, die dafür sorgt, dass die Summe über alle Bins gleich Eins wird. Das Grauwerthistogramm ist eine Diskretisierung der Helligkeitsverteilung, und deshalb wird in dieser Beschreibung auch der allgemeinere Begriff der Helligkeitsverteilung verwendet.

Bei ausreichender Modulgröße ist das Grauwerthistogramm bimodal mit je einem deutlichen linken und rechten Peak für die dunkeln und hellen Codeelemente und einem flachen Bereich dazwischen.

Figur 5 zeigt ein weiteres beispielhaftes Grauwerthistogramm nun für einen Barcode, schlecht aufgelöst mit einer Modulgröße von 0,93 ppm aufgenommen wurde. Wiederum zeigt das kleine Einsatzbild oben rechts zur Illustration einen realen Bildausschnitt dazu, der erahnen lässt, warum das Lesen eines solchen Codes besondere Aufmerksamkeit erfordert. Das Grauwerthistogramm unterscheidet sich deutlich von demjenigen eines gut aufgelöst aufgenommenen Code mit einer Modulgröße von mindestens 2 ppm. Die Bimodalität geht mit abnehmender Modulgröße mehr und mehr verloren. Durch die Verschmierung der zu niedrigen Auflösung bildet sich ein immer stärkerer Peak bei mittleren Grauwerten aus.

Damit ist die Grundidee der Erfindung illustriert: Die Helligkeitsverteilung, die insbesondere als Grauwerthistogramm gewonnen wird, erlaubt Rückschlüsse auf die Modulgröße. Dabei geht es um eine qualitative Aussage, ob die Modulgröße groß oder klein ist, wobei die Grenze dazwischen beispielsweise bei 2 ppm liegt, aber es ist überdies auch möglich, einen konkreten Wert für die Modulgröße zu schätzen. Die Figuren 4 und 5 zeigen wiederum Barcodes als Beispiele. Die Verschmierungseffekte durch zu geringe Auflösung, aus der die Modulgröße erfindungsgemäß letztlich bestimmt wird, treten ebenso bei zweidimensionalen Codes auf, so dass das Beispiel von Barcodes nicht einschränkend verstanden werden darf.

Wie zu Figur 4 und 5 erläutert, zeigt sich der Unterschied zwischen kleinen und großen Modulgrößen in der unterschiedlichen Ausprägung des Peaks für mittlere Grauwerte. Die Unterscheidbarkeit von Modulgrößen wird also erhöht, wenn speziell der mittlere Bereich oder Übergangsbereich des Grauwerthistogramms betrachtet wird.

Daher ist es besonders vorteilhaft, wenn das Grauwerthistogramm von vorneherein möglichst nur aus Pixeln gewonnen wird, die diesem Übergangsbereich entsprechen. Das lässt sich insbesondere dadurch erreichen, dass das Grauwerthistogramm nicht aus allen Pixeln eines Bildes eines Codes aufgebaut wird, sondern nur aus Pixeln in der Umgebung von Kanten. Dort an den Kanten ist der Verschmierungseffekt aufgrund der Unterabtastung oder zu geringen Auflösung besonders deutlich messbar.

Anhand der Figur 3 wurde bereits erläutert, wie sich die Kantenpositionen beispielsweise aus einer Ableitung eines Grauwertprofils schätzen lassen. Das Grauwerthistogramm wird aus den Pixeln an diesen Kantenpositionen sowie einer jeweiligen Pixelumgebung gebildet. Für die Zwecke, ein Grauwerthistogramm auf Umgebungen von Kanten zu beschränken, spielt es keine Rolle, dass die Kantenpositionen nur auf ein Pixel genau sind, denn der Subpixelbereich wird in dem Grauwerthistogramm ohnehin nicht berücksichtigt. Auch etwaige Kantenpositionsfehler durch Rauscheffekte werden toleriert, da sie lediglich dazu führen, dass hin und wieder ein Pixel fälschlich einbezogen oder ausgeschlossen wird. Das ist in jedem Fall noch deutlich besser, als unterschiedslos alle Pixel einzubeziehen.

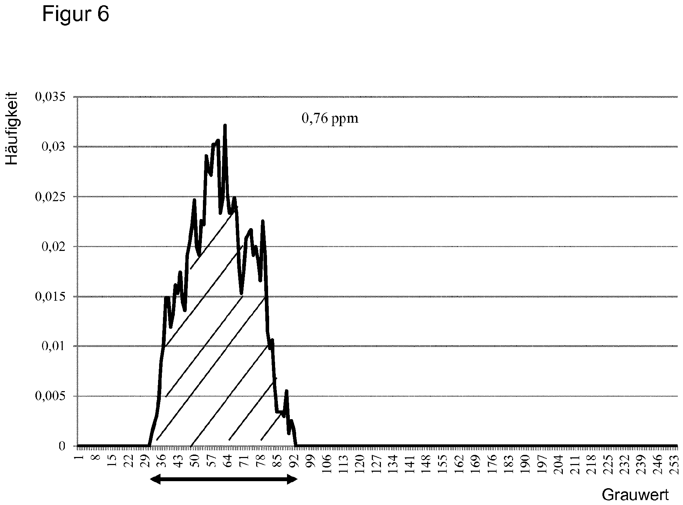

Ein solches kantenbezogenes Grauwerthistogramm ist in Figur 6 dargestellt. Es sei aber noch ergänzt, dass die Betrachtung eines Grauwerthistogramms nur aus Pixeln in der Umgebung von Kanten zwar besonders vorteilhaft ist und eine besonders gute Genauigkeit der Bestimmung der Modulgröße ermöglicht. Dennoch lässt sich die Modulgröße auch aus einfachen Grauwerthistogrammen schätzen, die sämtliche Pixel eines Bildes eines Codes oder Codebereichs berücksichtigen.

Um eine Modulgröße aus dem kantenbezogenen Grauwerthistogramm, oder alternativ einem vollständigen Grauwerthistogramm, zu bestimmen, wird das Grauwerthistogramm mit charakteristischen Größen beschrieben. Damit nicht einzelne Rauschereignisse die Auswertung verfälschen, wird vorzugsweise nur ein aktiver Bereich des Grauwerthistogramms betrachtet. Dazu gehören nur die Bins, die eine Rauschschwelle übersteigen, entweder angegeben als Mindestanzahl von zu dem Bin beitragenden Pixeln oder einen prozentualen Mindestanteil.

Als charakteristische Größe hat sich vornehmlich die Breite bewährt, die in Figur 6 durch einen Pfeil illustriert wird. Die Breite ist folglich die Differenz aus größtem und kleinstem in dem Grauwerthistogramm vorkommenden Grauwert. Eine weitere für die Berechnung der Modulgröße nützliche charakteristische Größe ist die Fläche oder das Integral des Grauwerthistogramms, das durch Aufsummieren der Bins gewonnen werden kann. Die Fläche eines normierten Histogramms ist natürlich Eins, so dass das Integral nur einen echten Beitrag liefert, wenn das Grauwerthistogramm nicht oder vor dem Bestimmen des aktiven Bereichs mit der Rauschschwelle normiert ist, oder wenn Teilbereiche wie unten noch erläutert reskaliert werden. Weitere denkbare charakteristische Größen sind die Höhe des Hauptmaximums, die Anzahl der Nebenmaxima oder das Verhältnis von Höhe des Hauptmaximums zu Höhe des ersten Nebenmaximums.

Eine denkbare konkrete Rechenvorschrift für die Modulgröße besteht darin, den Quotienten aus Integral und Breite zu bilden und diesen Messwert noch mit einem Skalierungsfaktor auf eine Modulgröße in der Einheit ppm abzubilden. Der Skalierungsfaktor lässt sich beispielsweise dadurch gewinnen, dass in einem Kalibrier- oder Einlernvorgang Codes gelesen werden, deren Modulgröße nachträglich sehr genau bestimmt wird und dann in Umkehrung der späteren Rechenvorschrift die nun bekannte Modulgröße mit dem Quotienten aus Integral und Breite verglichen wird.

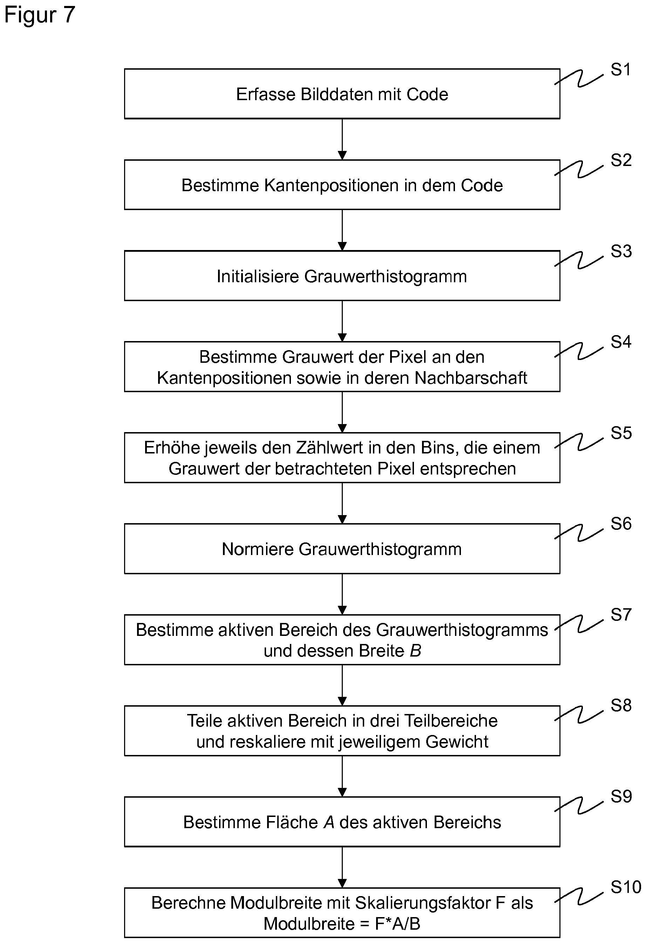

Figur 7 zeigt ein Ablaufschema für einen beispielhaften Algorithmus zum Bestimmen der Modulgröße aus einem Grauwerthistogramm. In diesem Algorithmus sind einige sehr konkrete Schritte vorgesehen, die als vorteilhafte Ausführungsform zu verstehen sind und die Allgemeinheit der sonstigen Beschreibung nicht beschränken.

In einem Schritt S1 werden die Eingangsdaten gewonnen, nämlich die Bilddaten des Codes beispielsweise in Form eines oder mehrerer Grauwertprofile, wie sie zu Figur 2 erläutert wurden.

In einem Schritt S2 werden die Kantenpositionen in dem Code bestimmt. Dazu wird beispielsweise die Ableitung von Grauwertprofilen herangezogen, wie zu Figur 3 erläutert. Die nur pixel- und nicht subpixelgenaue Bestimmung sowie etwaige Positionsfehler durch Rauschen sind für die Schätzung der Modulgröße kein Hindernis.

In einem Schritt S3 wird das Grauwerthistogramm initialisiert, indem die Bins entsprechend den möglichen Grauwerten bereitgestellt und die jeweiligen Zähler auf den Ausgangszustand Null gesetzt werden.

In einem Schritt S4 werden die Grauwerte der Pixel an allen Kantenpositionen sowie in deren Nachbarschaft, beispielsweise der vorangehenden i und der nachfolgenden j Pixel bestimmt.

In einem Schritt S5 werden jeweils die zu den im Schritt S4 bestimmten Grauwerte gehörigen Bins um Eins heraufgezählt. Die Schritte S4 und S5 sind nur zu Erläuterung getrennt, in der Praxis werden wohl eher sämtliche Kantenpositionen und pro Kantenposition die Pixel in deren Umgebung nacheinander durchgegangen und direkt für jedes relevante Pixel die Bins zu den entsprechenden Grauwerten des Pixels heraufgezählt. Alternativ zu dem kantenbasierten Grauwerthistogramm nach Schritt S2, S4 und S5 kann auch ein Grauwerthistogramm über sämtliche Pixel der Ausgangsdaten aus Schritt S1 gebildet werden, wobei dann die Schätzung der Modulgröße ungenauer wird.

In einem Schritt S6 wird das Grauwerthistogramm normiert, so dass die Summe über alle Bins den Wert Eins annimmt. Der Normierungsfaktor entspricht der Anzahl der zu dem Grauwerthistogramm beitragenden Pixeln oder der Summe über das noch nicht normierte Grauwerthistogramm. Die Normierung ist völlig optional und könnte stattdessen über den im Schritt S10 einzuführenden Skalierungsfaktor F abgebildet werden.

In einem Schritt S7 wird das Grauwerthistogramm auf einen sogenannten aktiven Bereich beschränkt, indem nur noch solche Bins betrachtet werden, die eine minimale Häufigkeit oberhalb einer Rauschschwelle aufweisen. Die Rauschschwelle kann eine Konstante oder ein Anteil, etwa ein Promillewert der Summe aller Häufigkeiten sein und eliminiert Ausreißer. Es wird eine Breite *B* als Differenz des größten und kleinsten Bins des aktiven Bereichs berechnet.

Ein nachfolgender Schritt S8 ist gänzlich optional und ein Beispiel für eine insgesamt optionale Reskalierung des Grauwerthistogramms, durch die bestimmte charakteristische Eigenschaften zur Bestimmung der Modulgröße nochmals verstärkt werden. In dieser konkreten Implementierung wird der aktive Bereich in drei gleich große Teilbereiche aufgespalten. Die Bins im linken und rechten Teil werden mit einem Seitengewicht, die Bins im mittleren Teil mit einem Zentralgewicht multipliziert. Alternativ könnte natürlich auch eine feiner aufgelöste Gewichtungsfunktion zum Einsatz kommen. Vorzugsweise dient die Reskalierung, wie auch immer konkret ausgestaltet, einer relativen Dämpfung der seitlichen Bereiche und einem relativen Hervorheben des zentralen Bereichs. Denn wie zu Figur 5 erläutert, ist für die Bestimmung der Modulgröße der mittlere Übergangsbereich von Grauwerten besonders interessant, der auf diese Weise nochmals betont wird.

In einem Schritt S9 werden die Bins des aktiven Bereichs aufsummiert, so dass ein Integral oder die Fläche *A* des aktiven Bereichs bestimmt wird.

In einem Schritt S10 wird der Quotient aus Fläche *A* und Breite *B* gebildet. Das ist bereits die gesuchte Abschätzung der Modulgröße, jedoch noch in der falschen Einheit. Daher wird stattdessen die Modulgröße zu *F*A*/*B* berechnet, also noch ein Skalierungsfaktor *F* eingeführt, der die Messgrößen aus dem Grauwerthistogramm auf eine Modulgröße in der Einheit ppm skaliert. Der Skalierungsfaktor f wird vorab empirisch bestimmt oder eingelernt.

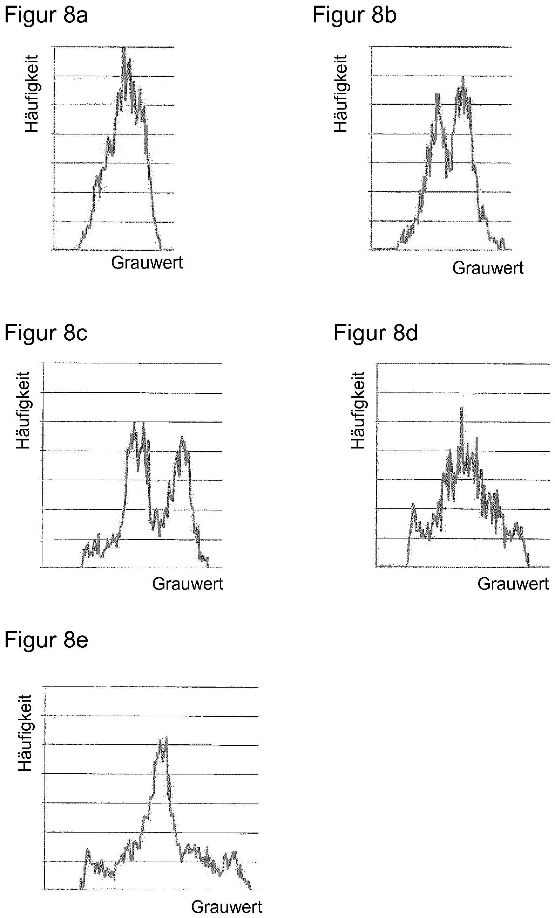

Die Figuren 8a-e zeigen Beispiele von Grauwerthistogrammen, jeweils eingeschränkt auf die Umgebung von Kanten wie zu Figur 6 erläutert, für verschiedene Modulgrößen. Die jeweilige tatsächliche Modulgröße konnte mit dem zu Figur 7 erläuterten Verfahren mit jeweils kleinem Fehler rekonstruiert werden. Im Einzelnen beträgt in Figur 8a die tatsächliche Modulgröße 0,8 ppm und die geschätzte Modulgröße 0,79 ppm, in Figur 8b die tatsächliche Modulgröße 1,0 ppm und die geschätzte Modulgröße 1,06 ppm, in Figur 8c die tatsächliche Modulgröße 1,2 ppm und die geschätzte Modulgröße 1,23 ppm, in Figur 8d die tatsächliche Modulgröße 1,4 ppm und die geschätzte Modulgröße 1,19 ppm sowie in Figur 8e die tatsächliche Modulgröße 1,5 ppm und die geschätzte Modulgröße 1,68 ppm.

In einem Datensatz mit mehr als 700 aus einer realen Anwendung aufgenommenen Bildern von Codes wird ein durchschnittlicher Fehler der geschätzten Modulgröße von 0,15 erreicht. Die Berechnungen werden für zunehmende Modulgrößen ungenauer. Ein Hauptgrund dafür ist, dass der Skalierungsfaktor F eigentlich eine Skalierungsfunktion ist, die für zunehmende Modulgrößen beispielsweise größer zwei ppm gedämpft werden müsste. Prinzipiell lässt sich eine Skalierungsfunktion genauso empirisch ermitteln oder einlernen wie ein Skalierungsfaktor. Das ist aber in der Praxis gar nicht unbedingt erforderlich, da die kleinen Modulgrößen, für die eine gute Schätzung mit konstantem Skalierungsfaktor F gelingt, den weitaus kritischeren Fall darstellen und ein Schätzfehler bei zunehmenden Modulgrößen daher meist hingenommen werden kann.

## Patentansprüche

1. Verfahren zum Bestimmen der Modulgröße eines optischen Codes (20), bei dem Bilddaten mit dem Code (20) aufgenommen werden und aus den Bilddaten eine Helligkeitsverteilung, insbesondere ein Grauwerthistogramm, bestimmt wird,
**dadurch gekennzeichnet,**
**dass** die Modulgröße aus der Helligkeitsverteilung bestimmt wird, d.h. aus einer Funktion der relativen Häufigkeit der möglichen Helligkeitswerte.

2. Verfahren nach Anspruch 1,
wobei die Modulgröße aus einem mittleren Bereich der Helligkeitsverteilung bestimmt wird.

3. Verfahren nach Anspruch 1 oder 2,
wobei in den Bilddaten Kanten des optischen Codes (20) aufgefunden werden und die Helligkeitsverteilung nur über Bilddaten in der Umgebung von Kanten gebildet wird.

4. Verfahren nach einem der vorhergehenden Ansprüche,
wobei die Helligkeitsverteilung auf einen aktiven Bereich zugeschnitten wird, in dem die Häufigkeit eine Rauschschwelle übersteigt.

5. Verfahren nach einem der vorhergehenden Ansprüche,
wobei die Modulgröße aus der Breite (*B*), dem Integral (*A*) und/oder dem Maximalwert der Helligkeitsverteilung bestimmt wird.

6. Verfahren nach Anspruch 5,
wobei die Modulgröße aus dem Quotienten aus Integral (*A*) und Breite (*B*) der Helligkeitsverteilung bestimmt wird.

7. Verfahren nach Anspruch 6,
wobei der Quotient mit einer Skalierungsfunktion (*F*) auf die Modulgröße abgebildet wird, insbesondere in der Einheit Pixel pro Modul.

8. Verfahren nach einem der vorhergehenden Ansprüche,
wobei die Helligkeitsverteilung mit unterschiedlichen Gewichtsfaktoren im Zentrum und an den Seiten der Helligkeitsverteilung reskaliert wird.

9. Verfahren nach Anspruch 8,
wobei das Zentrum der Helligkeitsverteilung relativ zu den Seiten angehoben wird.

10. Verfahren nach einem der vorhergehenden Ansprüche,
wobei die Helligkeitsverteilung in eine linke Seite, ein Zentrum und eine rechte Seite dreigeteilt wird, und wobei jeweils ein Gewichtsfaktor für die drei Teile zum Reskalieren verwendet wird.

11. Verfahren nach einem der vorhergehenden Ansprüche,
wobei der optische Code (20) nach dem Bestimmen der Modulgröße gelesen wird.

12. Verfahren nach Anspruch 11,
wobei der optische Code (20) mit einem anhand der Modulgröße ausgewählten und/oder durch die Modulgröße parametrierten Decodierverfahren gelesen wird.

13. Verfahren nach einem der vorhergehenden Ansprüche,
wobei die bestimmte Modulgröße mit einem Grenzwert verglichen wird, um je nach Über- oder Unterschreiten ein Decodierverfahren oder einen Baustein eines Decodierverfahrens einzusetzen, wobei insbesondere die Grenze in einem Bereich der Modulgröße von ein bis drei Pixel pro Modul liegt.

14. Codeleser (10) zum Lesen von optischen Codes (20), der einen Bildsensor (24) zum Erfassen von Bilddaten mit dem Code (20) und eine Steuer- und Auswertungseinheit (26) aufweist, die dafür ausgebildet ist, den Code (20) mit einem Decodierverfahren zu lesen,
**dadurch gekennzeichnet,**
**dass** die Steuer- und Auswertungseinheit (26) dafür ausgebildet ist, die Modulgröße des Codes (20) mit einem Verfahren nach einem der vorhergehenden Ansprüche zu bestimmen.

## Claims

1. A method for determining a module size of an optical code (20), wherein image data with the code (20) are acquired and a brightness distribution, in particular a greyscale histogram, is determined from the image data,
**characterized in that** the module size is determined from the brightness distribution, i.e. from a function of the relative frequency of the possible brightness values.

2. The method according to claim 1,
where the module size is determined from a central region of the brightness distribution.

3. The method according to claim 1 or 2,
wherein edges of the optical code (20) are located in the image data and the brightness distribution is formed only over image data in a neighborhood of edges.

4. The method according to any of the preceding claims,
wherein the brightness distribution is adapted to an active area where the distribution exceeds a noise threshold.

5. The method according to any of the preceding claims,
wherein the module size is determined from the width (B), the integral (A) and/or the maximum value of the brightness distribution.

6. The method according to claim 5,
wherein the module size is determined from the quotient of the integral (A) and the width (B) of the brightness distribution.

7. The method according to claim 6,
wherein the quotient is mapped to the module size with a scaling function (F), in particular using units of pixels per module.

8. The method according to any of the preceding claims,
wherein the brightness distribution is rescaled with different weighting factors at a center and at sides of the brightness distribution.

9. The method according to claim 8,
wherein the center of the brightness distribution is raised relative to the sides.

10. The method according to any of the preceding claims,
wherein the brightness distribution is divided into three parts, namely a left side, a center and a right side, and wherein a weight factor for each of the three parts is used for rescaling.

11. The method according to any of the preceding claims,
wherein the optical code (20) is read after determining the module size.

12. The method according to claim 11,
wherein the optical code (20) is read with a decoding method selected on the basis of the module size and/or parameterized by the module size.

13. The method according to any of the preceding claims,
wherein the determined module size is compared with a limit value in order to use a decoding method or a component of a decoding method depending on whether the module size exceeds or falls below the limit value, wherein in particular the limit value is in a range of a module size of one to three pixels per module.

14. A code reader (10) for reading optical codes (20), comprising an image sensor (24) for detecting image data with the code (20) and a control and evaluation unit (26) configured to read the code (20) with a decoding method, **characterized in that** the control and evaluation unit (26) is configured to determine the module size of the code (20) with a method according to any of the preceding claims.

## Revendications

1. Procédé pour déterminer la taille de module d'un code optique (20), dans lequel des données d'image sont enregistrées avec le code (20) et une répartition de la luminosité, en particulier un histogramme des valeurs de gris, est déterminé(e) à partir des données d'image,
**caractérisé en ce que**
la taille de module est déterminée à partir de la répartition de la luminosité, c'est-à-dire à partir d'une fonction de la fréquence relative des valeurs de luminosité possibles.

2. Procédé selon la revendication 1,
dans lequel la taille de module est déterminée à partir d'une zone centrale de la répartition de la luminosité.

3. Procédé selon la revendication 1 ou 2,
dans lequel des bords du code optique (20) sont retrouvés dans les données d'image, et la répartition de la luminosité n'est réalisée que sur la base des données d'image à proximité des bords.

4. Procédé selon l'une des revendications précédentes,
dans lequel la répartition de la luminosité est adaptée à une zone active dans laquelle la fréquence dépasse un seuil de bruit.

5. Procédé selon l'une des revendications précédentes,
dans lequel la taille de module est déterminée à partir de la largeur (B), de l'intégrale (A) et/ou de la valeur maximale de la répartition de la luminosité.

6. Procédé selon la revendication 5,
dans lequel la taille de module est déterminée à partir du quotient de l'intégrale (A) et de la largeur (B) de la répartition de la luminosité.

7. Procédé selon la revendication 6,
dans lequel le quotient est représenté sur la taille de module à l'aide d'une fonction de mise à l'échelle (F), en particulier dans l'unité de pixels par module.

8. Procédé selon l'une des revendications précédentes,
dans lequel la répartition de la luminosité est remise à l'échelle avec des facteurs de pondération différents au centre et sur les côtés de la répartition de la luminosité.

9. Procédé selon la revendication 8,
dans lequel le centre de la répartition de la luminosité est surélevé par rapport aux côtés.

10. Procédé selon l'une des revendications précédentes,
dans lequel la répartition de la luminosité est divisée en trois parties, à savoir en un côté gauche, un centre et un côté droit, et un facteur de pondération respectif pour chacune des trois parties est utilisé pour la remise à l'échelle.

11. Procédé selon l'une des revendications précédentes,
dans lequel le code optique (20) est lu après avoir déterminé la taille de module.

12. Procédé selon la revendication 11,
dans lequel le code optique (20) est lu en mettant en œuvre un procédé de décodage sélectionné sur la base de la taille de module et/ou paramétré par la taille de module.

13. Procédé selon l'une des revendications précédentes,
dans lequel la taille de module déterminée est comparée à une valeur limite afin d'utiliser un procédé de décodage ou une composante d'un procédé de décodage selon qu'elle est dépassée ou non, en particulier la limite se situant dans une plage de la taille de module de un à trois pixels par module.

14. Lecteur de code (10) pour la lecture de codes optiques (20), comprenant un capteur d'image (24) pour l'acquisition de données d'image avec le code (20) et une unité de commande et d'évaluation (26) qui est réalisée pour lire le code (20) par un procédé de décodage,
**caractérisé en ce que**
l'unité de commande et d'évaluation (26) est réalisée pour déterminer la taille de module du code (20) par un procédé selon l'une des revendications précédentes.
